# EUROPEAN PATENT APPLICATION

(11) **EP 1 069 500 A1**
(43) Date of publication of application: **17.01.2001**
(21) Application number: 99113414.9
(22) Date of filing: 12.07.1999
(51) Int. Cl.: G06F 9/44

(54) **Downloadable user-interface**

(71) Applicant: International Business Machines Corporation, Armonk, NY 10504 (US)
(72) Inventor: Husemann, Dirk, 8134 Adliswil (CH); Moser, Michael, 8006 Zürich (CH)
(74) Representative: Heusch, Christian

(57) **Abstract**

Scheme and apparatus for controlling a computer device (10) with limited user-interface (11) via a remote computer device (12), whereby both computer devices are interconnected through a wireless communication channel (16) and both computer devices support a common communications protocol. In order to allow control of the computer device (10) with limited user-interface (11) some user-interface information is sent from the computer device (10) with limited user-interface (11) to the remote computer device (12). At this remote computer device (12) a user-interface (19) is provided. Then some user input is received at the remote computer device (12) and this user input is sent to the computer device (10) with limited user-interface (11) where the user input is executed.

## Description

### TECHNICAL FIELD

The invention concerns computer systems which have a limited user-interface, such as handheld pervasive computing devices, and in particular a scheme for allowing easy interaction with such computer systems.

### BACKGROUND OF THE INVENTION

Computer systems have become dramatically smaller and more portable. Even very powerful personal computers (PCs), for example, are small enough to sit on the desk at work. Smaller still are lap top computers and notebook computers. There are computer terminals which are small enough to be mounted in a vehicle such as a delivery truck. Still smaller are the hand held terminals typically used for their portability features where the user can carry the terminal in one hand and operate it with the other.

There is a trend to offer consumer electronic devices that comprise some sort of a computer system, e.g., a microprocessor. Usually, these computer systems not only control the operation or function of the consumer device, but also provide some interface for a user or operator to control certain functions or parameters according to actual needs. It is in the nature of these consumer devices that they do not have a full user-interface like a computer with display and keyboard. It is not likely, that a dishwasher, for example, will ever have such a full user-interface. In some cases the interface is limited because there are space constraints (a typical example for this is a wrist watch), in other cases the interface is limited to keep the cost of manufacturing low, or the processing power of the computer system or the constrained memory space limits the interaction between the user and system.

Many of the existing devices have an inadequate user-interface. A typical examples is a compact disk (CD) player which allows programming of CD titles using a small four button-control. Programming of such a CD player is very cumbersome because one needs to use the buttons to move through the entire alphabet to select letters and/or numbers. Another example is a wrist watch that allows to enter phone book entries, appointments, and to-do items. Usually, there is some sort of small keyboard with a very limited number of keys. Furthermore, the display is small and its resolution limited. Certain keys have to be pressed several times to reach special characters, or to activate special functions. Yet another example is a personal digital assistant (PDA) with touch sensitive screen. In this case the screen occupies most of the device's surface and there are no or almost no buttons. Some functions are easily accessible using a pointing device, but other functions have to be selected or activated flipping through several layers of menus, for example. Other examples are telephones, vending machines, microwave ovens, mobile phones, etc. For the purposes of the present description these devices are referred to as user-interface limited devices.

There exist a few approaches to use a personal computer (PC) to run a better user-interfaces, e.g. the "Nokia Cellular Data Suite" for mobile phones that allows the entry of phonebook data, easier composition of SMSes. The Cellular Data Suite is a hardware and software package from Nokia designed for cellular phones. Another example is a wrist-watch that has an IR-communication feature (such as the Casio PC Unite Data Bank Watch, HBX-100B-1) used to connect to a PC.

There are many other examples of user-interfaces that are severely lacking for various reasons, the most prominent one certainly being size and cost constraints. Often such user-interface restrictions make the respective devices less useful for their owners than they could be.

There should be a way to unleash the full potential of all these devices and to program and configure them much more conveniently.

There is growing demand to offer devices that are 'open' in the sense that a user has access via an interface to the device's processor or other components. An ideal 'open' device can be fully controlled by the user, preferably within well-defined rules to prevent misuse or destruction of the device itself.

There is another unrelated trend. There is a growing number of devices that are network enabled which means that they can communicate with one or more other devices via a network. This can be achieved using physical connections, such as cables or fibers, for example. The smaller the devices get, the more important it becomes to replace these physical connections by wireless connections (e.g. body networks, radio frequency connections, or infrared connections), since physically connecting the devices by means of cables or fibers severely reduces the efficiency gained by making the units smaller. Ad-hoc wireless connections are required where devices move around, enter an area and exit the area. The term ad-hoc refers to the need for frequent network reorganization.

There are many different communications approaches known that have been developed and designed with an eye on the communication between devices or subsystems. In the following some wireless communications approaches will be mentioned. There are many fiber or cable-based, standardized approaches that are suited as well.

GTE Corporation has developed a short-range radio-frequency (RF) technique which is aimed at giving mobile devices such as cellular phones, pagers and handheld personal computers (PCs) a smart way to interact with one another. GTE's technique is tentatively named Body LAN (local area network). The original development of Body LAN was via a wired vest with which various devices were connected (hence the name Body LAN). This graduated to an RF connection a couple of years ago.

Xerox Corporation has developed a handheld computing device called PARC TAB. The PARC TAB is portable yet connected to the office workstation through base stations which have known locations. The PARC TAB base stations are placed around the building, and wired into a fixed wired network. The PARC TAB system uses a preset knowledge of the building layout and the identifiers of the various base stations to decide where a PARC TAB portable device is by the strongest base station signal. A PARC TAB portable device has a wireless interface to the base stations. The PARC TAB system assumes that the PARC TAB portable device is always connected to the network infrastructure. The location of each portable PARC TAB device is always known to the system software. The base stations establish regions and are connected to power supplies. PARC TAB communication systems have a star topology.

In an attempt to standardize data communication between disparate PC devices several companies, including Ericsson, IBM, Intel, Nokia, and Toshiba established a consortium to create a global standard for wireless RF-based connectivity between fixed, portable and mobile devices. There are many other adopter companies. The proposed standard comprises an architecture and protocol specifications ranging from the physical layer up to the application layer. The Bluetooth technology will allow users to connect a wide range of devices easily and quickly, without the need for cables, expanding communications capabilities for mobile computers, mobile phones and other mobile devices. The Bluetooth operating environment is not yet fully defined, but there are expected to be similarities with the IrDA (Infrared Data Association) specification and the Advanced Infrared (AIr) specification. Other aspects that probably will find their way into Bluetooth might stem from the IEEE standard 802.11 and/or HIPERLAN, as promulgated by the European Telecommunications Standards Institute (ETSI).

Bluetooth radio technology provides a mechanism to form small private ad-hoc groupings of connected devices away from fixed network infrastructures. Bluetooth makes a distinction between a master unit - which is a device whose clock and hopping sequence are used to synchronize all other devices - and slave units in the same network segment. In other words, the Bluetooth approach is centralized. A query-based discovery scheme is used for finding Bluetooth devices with an unknown address. Queries are also centralized at a registry server. Further details can be found in Haartsen, Allen, Inouye, Joeressen, and Naghshineh, "Bluetooth: Vision, Goals, and Architecture" in the Mobile Computing and Communications Review, Vol. 1, No. 2. Mobile Computing and Communications Review is a publication of the ACM SIGMOBILE.

HomeRF (based on Shared Wireless Access Protocol (SWAP) is another example of an operating environment which can be used to connect devices. A HomeRF Working Group was formed to provide the foundation for a broad range of interoperable consumer devices by establishing an open industry specification for wireless digital communication between PCs and consumer electronic devices anywhere in and around the home. The working group, which includes the leading companies from the personal computer, consumer electronics, peripherals, communications, software, and semiconductor industries, is developing a specification for wireless communications in the home called the SWAP. The HomeRF SWAP system is designed to carry both voice and data traffic and to interoperate with the Public Switched Telephone Network (PSTN) and the Internet; it operates in the 2400 MHz band and uses a digital frequency hopping spread spectrum radio. The SWAP technology was derived from extensions of existing cordless telephone (DECT) and wireless LAN technology to enable a new class of home cordless services. It supports both a time division multiple access (TDMA) service to provide delivery of interactive voice and other time-critical services, and a carrier sense multiple access/collision avoidance (CSMA/CA) service for delivery of high speed packet data. The SWAP system can operate either as an ad-hoc network or as a managed network under the control of a connection point. In an ad-hoc network, where only data communication is supported, all stations are equal and control of the network is distributed between stations. For time critical communications such as interactive voice, the connection point - which provides the gateway to the PSTN - is required to coordinate the system. Stations use the CSMA/CA to communicate with a connection point and other stations. Further details about HomeRF can be found at the Home Radio Frequency Working Group's web site http://www.homerf.org. The SWAP specification 1.0 is incorporated by reference in its entirety.

There are several more or less elaborate protocols and techniques that allow a communication between two or more devices. The above described Bluetooth radio technology and HomeRF approach are prominent wireless examples.

It is an object of the present invention to provide a scheme for providing a more powerful user-interface to an interface limited device.

It is another object of the present invention to provide a scheme for simplified and/or improved human interaction with an interface limited device.

### SUMMARY OF THE INVENTION

The present invention concerns a scheme, as claimed, for controlling a computer device with limited user-interface using a computer device with a more powerful and/or better user interface.

The present invention concerns a system comprising a computer device with limited user-interface and a computer device with a more powerful and/or better user interface, as claimed.

The present invention concerns a computer program product, as claimed.

With the present invention, a solution is presented that, when used in combination with a suited communications protocol, allows a user to interact with or control an interface limited device using a second (independent) device.

In other words, the present invention provides an improved user-interface to a user-interface restricted device by using a more powerful device in its vicinity. The better input capabilities of the more powerful device are employed to control certain aspects of the user-interface restricted device. The present invention allows to provide a more intuitive user-interface, for example. Devices according to the present invention allow a simplified and/or improved human interaction with an interface limited device.

The present scheme facilitates various implementations.

### DESCRIPTION OF THE DRAWINGS

The invention is described in detail below with reference to the following schematic drawings. It is to be noted that the Figures are not drawn to scale.
- **FIG. 1**: is a schematic block diagram of an embodiment, in accordance with the present invention.
- **FIG 2.**: is a schematic representation of an exemplary execution tree.
- **FIG. 3.**: shows a first browser window.
- **FIG. 4.**: shows a second browser window.
- **FIG. 5.**: shows a third browser window.
- **FIG. 6**: is a schematic block diagram of another embodiment, in accordance with the present invention.
- **FIG. 7A**: is a schematic block diagram of an embodiment, in accordance with the present invention.
- **FIG. 7B**: is a schematic block diagram of the logical/software elements of an embodiment, in accordance with the present invention.
- **FIG. 7C**: is a schematic block diagram of the hardware layer of an embodiment, in accordance with the present invention.
- **FIG. 7D**: is a schematic block diagram of the hardware layer of an embodiment, in accordance with the present invention.
- **FIG. 8**: is a schematic flowchart used to describe aspects of a user-interface limited device, in accordance with the present invention.
- **FIG. 9**: is schematic flowchart used to describe aspects of a device that is used to control a user-interface limited device, in accordance with the present invention.
- **FIG. 10**: A Wireless Markup Language document describing the user-interfaces of Figures 3-5.

### DESCRIPTION OF PREFERRED EMBODIMENTS:

For the purpose of the present description, a network can be anything that allows a first device (the user-interface limited device) to communicate with a second device (which has a better user-interface, for example). A simple point-to-point link, a local area network (LAN), a GSM telephone link, an ethernet link or any other kind of link is herein for sake of simplicity referred to as network. This network can either be a physical network or a wireless network (e.g., infrared (IR), radio-frequency (RF), such as HomeRF). The network may be completely isolated from any other network, or it might comprise one or more access points which provide the devices with access to the another network.

The specific range that constitutes a wireless network in accordance with the present invention depends on actual implementation details. Generally, a wireless network can be described as having a coverage area between a few square meters and several thousands of square kilometers (e.g., in case of a GSM network). Under certain circumstances the communication range might even go beyond. The two devices which communicate with each other have to be in vicinity which means that they have to be able to exchange information with each other.

The devices need to be able to transmit and/or receive information via the network. For this purpose two devices that communicate with each other have to support the same communication protocol.

Well suited for this communication between devices is the Bluetooth communications scheme, which is described in the Haartsen, Allen, Inouye, Joeressen, and Naghshineh, "Bluetooth: Vision, Goals, and Architecture" in the Mobile Computing and Communications Review, Vol. 1, No. 2. Mobile Computing and Communications Review is a publication of the ACM SIGMOBILE. This reference is incorporated by reference in its entirety.

It is assumed, that once the devices are in vincinity of each other a wireless communication path between these devices can be established - e.g. using magnetic field (near field / 5 - 30 cm), infrared (IR), e.g., IrDA (0.5 - 2m) or AIr (1 -10m), or low-power radio-frequency (RF) communication, e.g. BlueTooth (∼1 - 10m), or HomeRF (∼1 - 50m), just to give some examples of wireless schemes that are suited.

Of course this vicinity requirement could also be loosened given some global addressing scheme and a local proxy (e.g. an IR-beacon on each ceiling or a BlueTooth "relay" in each room or each flat) connected to some network (e.g. the Internet) thus effectively allowing remote control of all kind of devices from virtually anywhere on the globe. Such a global addressing scheme is also required in a GSM-based implementation of the present invention.

It is understood by those skilled in the art that at the present time many of the protocols that are suited for use in wireless communications systems are still in draft status. The present scheme is independent of any particular protocol and can be used in connection with many such protocols. Somebody skilled in the art is able to implement the present scheme in existing protocol environments as well as in protocol environments under development or yet to be developed.

The present scheme can be used anywhere inside (warehouses, on manufacturing floors, in offices, on trading floors, in private homes) and outside of buildings, in cars and trucks, in airplanes, just to mention some examples.

Two devices can be connected using a 1:1 connection. Possible media are infrared and magnetic field. The procedure to setup such a 1:1 connection can be similar to today's setup of a connection between two IrDA enabled devices, i.e. the devices must be positioned such that their communication subsystems (transceivers) can "see" each other. Then both systems are triggered to start a connection setup procedure until a wireless communication channel is established.

Likewise, two devices can be connected using a shared medium. A possible shared medium is obviously RF (Radio Frequency). Possible systems could be based on technology and protocols like BlueTooth, DECT, and HummingBird.

Details about HummingBird transceivers are given in "Hummingbird Spread Spectrum Transceiver Operator's Manual", Rev. 24 June, 1998, XETRON Corp., Cincinnati, Ohio, USA

Details concerning the basic problems re. identification and addressing, initial (resource) discovery, matching and selection of communication partners, etc. depend on the medium used and the communications protocol employed.

When referring to a device, any kind of device is meant that can establish a network connection to another device. Examples of devices are: laptop computers, workpads, nodepads, personal digital assistants (PDAs), notebook computers and other wearable computers, desktop computers, computer terminals, networked computers, internet terminals and other computing systems, set-top boxes, cash registers, bar code scanners, point of sales terminals, kiosk systems, cellular phones, pagers, wrist watches, digital watches, badges, and smart cards. Other contemplated devices include: headsets, Human Interface Device (HID) compliant peripherals, data and voice access points, cameras, printers, fax machines, keyboards, joysticks, HiFi systems, audio (sound) cards, loudspeakers, amplifiers, video cards, kitchen appliances, tools, sensors such as smoke and/or fire detectors, and virtually any other digital device.

Other examples of devices that can be used in connection with the present invention are, personal effects being equipped with computer-like hardware, such as a "smart wallet" computer, jewelry, or articles of clothing. In addition to a "smart wallet" computer, there are a number of other variations of these so-called wearable computers. A "belt" computer is such a variation which allows the user to surf, dictate, and edit documents while they are moving around. Yet another example is a child's computer which is comparable to a personal digital assistant for grade-school children. The child's computer might hold assignments, perform calculations, and help kids manage their homework. It can interface with other children's computers to facilitate collaboration, and it can access a teacher's computer to download assignments or feedback. Any wearable or portable device, any office tool or equipment, home tool or equipment, system for use in vehicles, or systems for use in the public (vending machines, ticketing machines, automated teller machines, etc.) might comprise the present invention.

It is furthermore assumed that a device, as used in connection with the present invention, has a minimum amount of processing power that enables it to participate in the scheme according to the present invention. These devices are thus also referred to as computer devices. Most, if not any, of the above listed devices can be viewed as being devices with limited user-interface. This is even the case for a personal computer which has a display and a keyboard. There still is room for improvement of such a computer's interface, e.g., by adding speech input. There are no absolute criteria which can be used to decide whether a particular device is a device with limited user-interface or not. There is always room for improvement and thus any computer device per se is assumed to be a device with limited user-interface. There present scheme works in any constellation where there is a second computer device that has a more powerful user-interface, more adequate, more convenient, or better user-interface capabilities. Not all aspects of the user-interface have to be better or more powerful. It is sufficient, for example, if there is a first devices which has no speech input (i.e. it has a limited user-interface) and a second device which has a speech input.

Some of the above-mentioned devices can be regarded as the device (controller) whose interface is used to interact with the user-interface limited device (controlled device).

A computer device is referred to as a computer device with limited user-interface if one or more of the following applies:
- it has an inadequate user-interface;
- it has a user-interface that is small, difficult to read, understand, or hear;
- it has a user-interface that is not convenient;
- it has no graphics capable display (e.g. a text-only display);
- it has a restricted number of input keys, or input keys which are small;
- it has many functions which are mapped to a limited number of buttons and thus imposes complicated control structures that make it difficult to operate the device without prior extensive study of a user's manual (especially for seldom used or advanced functions);
- it has a user-interface which is not powerful enough such that it is too slow, has low resolution, or the like.

Devices with better user-interface capabilities usually fulfill one or more of the following criteria:
- it has a large screen;
- it has a screen with graphics capability;
- it has a full keyboard;
- it has a pointing device;
- it has voice-input, and so forth.

Please note that the user-interface can be any kind of interface for interaction between a user and the device, such as a display, keyboard, mouse, track point, audio output, speech recognition input, tactile input, etc.

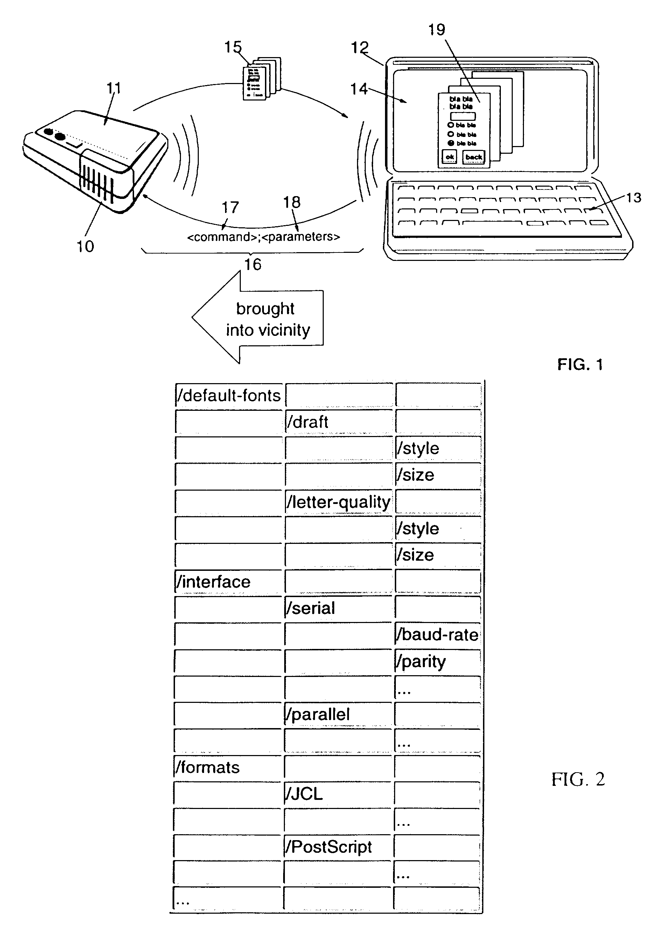

A typical environment where the present invention is used is illustrated in Figure 1. There is a first computer device 10 which has a limited user-interface 11 (in the present example the user-interface comprises a simple display and a few buttons). Assuming, that there is a second computer device 12 "nearby" (i.e., in vicinity of the first device 10) that has better user-interface capabilities (keyboard 13 and display 14) than the first device 10, that we want to control or configure and assuming, that the two devices 10 and 12 find a way to communicate with each other, this allows the deployment of the better user-interface capabilities of said second device 12 to ease and speed-up the use of the first device 10 by shipping a better user-interface (user-interface description 15) to the second device 12. The first device 10 and second device 12 communicate through a wireless communications channel 16. A better user-interface is a user-interface that is easier to use, "richer" (in that it has more features or contains explanations, for example), more intuitive, faster, or the like. The user-interface description 15 is then processed by the second device 12 such that a better user-interface 19 is then displayed and operated on the second device 12. Then user-inputs and/or commands and/or parameters are sent back to the first device for execution. In the present example commands 17 (<command>) and parameters 18 (<parameters>) are sent back to control or operate the device 10.

The capability that a first device 10 can provide its user-interface in some standard format (herein referred to as user-interface description 15) may be broadcast to all other devices (including the above-mentioned second device 12) appearing in its vicinity. If the user-interface description 15 is sufficiently small then the entire interface description can be sent right away and stored at these other devices.

If there are a plurality of devices ("controllable" devices) with limited user-interface within vicinity of a second device with better user-interface, then the user can request some visualization on the second device of all "controllable" devices (e.g., in the form of a list, a menu, a graph, or the like) from which he/she can then choose one device with limited user-interface and request its user-interface to be displayed to start the process, according to the present invention.

The communication path 16 between the first device 10 and second device 12 is used to transfer data describing a suitable user-interface (user-interface description 15) for a specific transaction from the first device 10 (thus becoming the "controlled device" or server) to the "nearby" second device 12 (the controller or client/user agent). The second device 12 renders the user-interface description 15 to the user. This can be done by displaying it (reference number 19) to the user on display 14, for example. Then, the second device 12 awaits the user's reaction.

The user answers the posed question(s), e.g. by picking his/her choice from a presented menu, or supplies input by keying-in the requested data. In doing so the user can make use of the controller-device's better user-interface capabilities (be it a larger keyboard 13, voice-recognition, color-display 14, or the like). Information describing the user's reaction, selection, or input is then sent back to the controlled device in the form of "requests" (i.e. commands 17 and - optionally - one or more parameters 18).

The major point of the inventive approach is, that the controlling device 12 does not need to have any prior knowledge of the features and the user-interface of the controlled device 10. No special software needs to be pre-installed because everything is dynamically downloaded when required. Any Laptop or PDA that happens to be handy or maybe even a public kiosk system could quickly be used as "user-interface server" without need to install anything nor without leaving any traces on that system (except maybe a few modified cache-entries in the system's memory). However, there are of course some prerequisites that have to be fulfilled by all involved devices to allow such a scenario to become reality.

Standardized user-interface description: There must be a standardized way and format to describe sufficiently rich user-interfaces such that it is possible to render typical user-interface controls, i.e. display input-prompts, selection-menus, help-texts or other text-messages to visualize a device's status, etc. Suitable candidates for such user-interface description formats are:
- HTML (the HyperText Markup Language used in the WWW),
- WML (Wireless Markup Language defined by the WAP forum),
- other, still-to-be-defined XML (Extensible Markup Language) dialects,
- X-windows protocol.

One preferably uses a user-interface description which is optimized so that transmissions between devices are efficient. The user-interface description should be flexible and extensible.

Standardized Communication: The devices must be able to detect each other's presence, exchange basic capability description and - on demand - be able to setup a sufficiently reliable point-to-point connection amongst each other. This basic capability description can be a simple flag or bit combination, for example, which describes standard types of services. These standard type of services might be predefined such that they can be identified by such a simple flag or bit combination. The basic capability description can also be any other kind of information which is suited to identify one or several services offered. In addition to identifying a type of service, one might have to set or define certain parameters and options (for sake of simplicity hereinafter referred to as parameters).

There are thus some common requirements. To this end it is assumed, that the devices run some kind of resource discovery scheme and exchange some form of capability and/or device-class description once they detect their mutual presence. A device must be able to become aware of its neighborhood, to discover potential communications peers within mutual reach, and their service offerings. In addition, it is advantageous if a device is able to indicate its presence and to advertize its own service, if any. The advertisement of service information can be done in another protocol layer. Another approach is conceivable where it is inherently known which service is offered by what device (i.e., all devices XYZ offer the services A and B, and all devices MNO offer the services C and D, for example).

An example of a scheme for advertisement and/or discovery of services is addressed in a co-pending European patent application entitled "Service Advertisements in Wireless Local Networks", filed on 25 January 1999, currently assigned to the assignee of the present application. According to this scheme, each device will take turns broadcasting (advertising) a list of services (among which could be the ability to send user-interface description and receive the corresponding commands) available. The general approach is that a group of devices will take turns broadcasting (advertising) a list of services (herein referred to as user-interface description) available. By using variable transmission delays that are reset when other advertisements are seen, and adjusting the distribution of these delays, new devices can quickly be identified, and absent machines can be noticed. This scheme allows to form small private ad-hoc groupings of connected devices. The scheme allows to set up local networks immediately (ad-hoc) if needed, and to take them down if not needed anymore. According to this scheme a network of all eligible proximate devices (devices that will allow themselves to be networked) can be set up while allowing new devices to join and leave at their own convenience.

The present invention is independent of the scheme for advertisement and/or discovery of services. What is required is that a service-consuming device (i.e. the device which has a better user-interface) knows or learns about service-providing devices (i.e. those devices with limited user-interface) within vicinity. For this purpose the service-consuming device stores service information (e.g. a list of entries describing the capability to provide a user-interface description of other devices) identifying services of which it is aware of. The service information has to be updated frequently, since a wireless network might change from time to time.

One example of a resource discovery scheme is described in the following. This scheme allows two devices within vicinity to determine whether certain services are available and what kind of services there are. One device maintains a record with information about services and associated identifiers about the other device which acts as service-providing device. The one device may comprise a service discovery module which maintains a record with information about services and associated identifiers, and a list of identifiers about service-providing devices. The service discovery module enables the device to distinguish a service offered by a service-providing device in vicinity from a service offered by a service-providing device not being in vicinity. The resource discovery scheme can be defined such that it, when used in combination with a wireless communications protocol, allows to ensure/control that certain services or tasks are carried out or assigned to a device with better user-interface which is within adjacency of the device (the device with limited user-interface) which requests the service.

The device's capability description may include a basic initial message (a URL / a "pointer" - at most 100..200 bytes - see later for more details) which is stored at the receiver side as part of each device's description, for example.

The controlled device must be able to send user-interface descriptions in some standardized format and to receive and interpret inputs, commands and/or parameters sent back from the controlling device.

The controlling device must understand and be able to receive these user-interface description and to make them accessible to the user (on demand or automatically) - e.g. by displaying a menu or a list of all devices currently in reach. The controlling device furthermore must be able to forward commands to the controlled device.

The basic idea of the present invention will be described in connection with an embodiment. In the following, the invention is implemented and described in a communications system using WML. The benefits of WML are:
- small, simple, XML-based "language".
- relatively small and simple browser, that will soon be available on many mobile devices.
- "deck-of-cards" metaphor maps perfectly to familiar configuration paradigms ("property-sheets" or "-tabs").
- WML can be encoded very compact (binary WML or tokenized WML), i.e. most tags become single-byte items and strings are collected in a string-table. In the example given below the original WML file is 1.5kB, while the tokenized form is 652 bytes only and that is even without compressing the string table, yet. If that table would be compressed (e.g., using Lempel-Ziv, the same algorithm used in the popular .zip or .gzip tools) the resulting files were even smaller.
- has built-in variables replacement functionality.
- has timer functionality.

Prerequisites: To signal that certain commands (and parameters) are to be sent to the controlled device the WML-browser (or its underlying communication stack) must recognize URLs that use a special "scheme" or "protocol".

Based on existing schemes, like:
- http://<host>/<path>[;<params>][?<query>][#<anchor>] for HTTP (HyperText Transport Protocol, i.e. the Internet-WWW protocol) requests as specified in [RFC1738] and [RFC2068];
   ftp://<host>/<path>/<filename>
   for the file transfer protocol; and
   gopher://<host>/<path>/<filename>
   for the gopher protocol, there have already been suggestions to extend this notation by additional schemes.
- One that has already widely been adopted and incorporated into most WWW-browsers is the "file:"-scheme:
   file://<host_name>/<local_path>/<filename>
   (Note: the //<host_name> fragment is optional and - if not present - defaults to "this host" or "local host" which accesses a local file rather than a file or resource located at some server).
- Similarly, but not yet adopted, there has been the suggestion to add a scheme that allows the control of and communication via "local" devices (serial ports, printer ports, smart-card readers, USB-ports, etc.) using:
   device://<portname>/<cmd>[;<params>][?<query>][#<anchor>]
   (Note [...] indicates optional parts) - e.g. device: //COM1/setbaudrate; 19200 to change the first communication port's serial speed to 19200 baud/s.
- We propose (and implemented) a similar scheme to send commands to devices that are "attached" using some short-range communication means (like IR or RF) using
   <comm>://<device_id>[:<portnr>]/<prefix>/<cmd>[;<params>.]
   Under <comm> we understand the network or communication means over which this command/request is to be sent, e.g. "irda" or "bluetooth", "hummingbird", etc.
   <device_id> is needed for communication means, that support multi-party communication (i.e. not only 1:1 communication like IrDA V1) to address a specific device. The optional part :<portnr> can be further used to specify a specific port, in case more than one communication channel exists between these devices or to choose a non-default channel for special purposes (e.g. for device monitoring, diagnosis, configuration, etc.).
   This device-id could be the concatenation of some manufacturer- and model-id (e.g. "sony_cdp_990X") with some user-specified arbitrary name or physical location (e.g. "mmoser_livingroom"')
   <prefix> (which has the same syntax like a URL-<path>) can be used to group commands into some tree-structure, e.g. if one looks at a printer's menu-tree (execution tree) as shown in Figure 2.
   <cmd> (or the last path-fragment) specifies the actual command, while <params> describes optional parameters of the above command:
   Examples:
   bluetooth://sony_cdp_990_mmoser_livingroom/cd_titles/add;BMW:Exodus
   bluetooth://sony_cdp_990_mmoser_livingroom/play_mode/select;shuffle.
Resource discovery: The device sends a string in the format
wml_ui=<device_id>/[<path>]/<command>[;<parameters>]
for example:
wml_ui=sony_cdp_990_mmoser_livingroom/main_menu
when describing its resources to its peers. In the above example wml_ui is a predefined service name (standardized) and
sony_cdp_990_mmoser_livingroom/main_menu is an initial URL. That URL decomposes into a "host name" sony_cdp_990_mmoser_livingroom which is a logical name that has to be mapped to the physical address of the device and the remainder (command and optional parameters) which is the actual request to be sent to the device, in this example the command "main_menu" (without parameters) to return the initial main menu.

This URL is stored as part of the description that all devices maintain about other devices currently in reach. If the user-interface is small enough the device might even send the entire user-interface description right away.

Selection of service: Devices, that can act as service-providers and controllers (e.g. PDAs, Laptops, PCs, ...) for a device with limited user-interface have some means to display the user-interface description received as user-interface. If there are a plurality of devices with limited user-interface in vicinity of a device that serves as controller, a choice of this plurality of devices together with a user-interface capability-description can be displayed on the controller's screen. E.g., such a device could include an "act as user-interface for a nearby device"-button in their "system-menu". Clicking on that entry would pop up the above mentioned list of "controllable" devices. The user can pick one from that list whereupon the user-interface-URL (wml-user-interface-URL) is submitted to the selected device thus initiating the process according to the present invention.

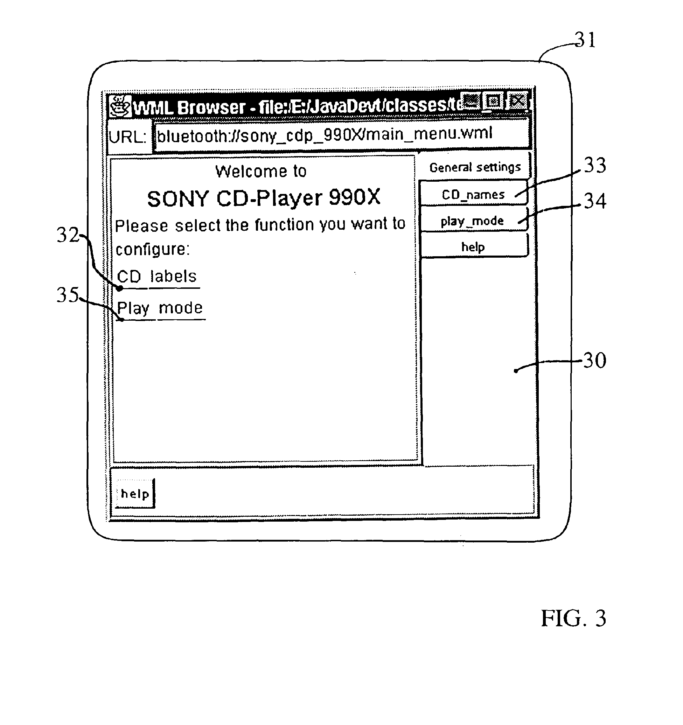

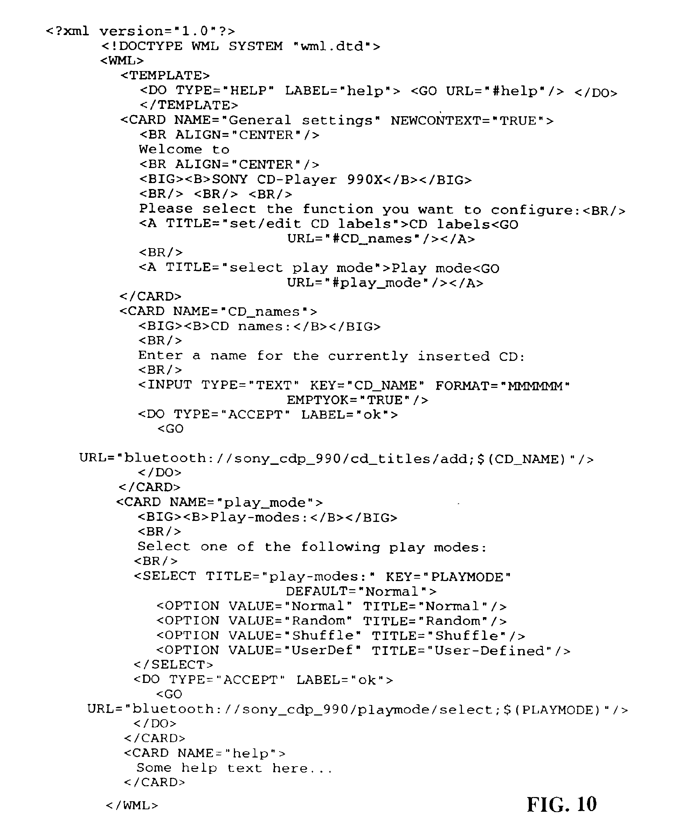

The submission of the user-interface-URL triggers the transfer of the main-control menu of that device. WML uses a "deck of cards" metaphor which quite nicely maps to "property sheets", a visualization technique that is often used to edit object attributes and parameters. For the present CD-player example such a deck could look as shown in Figures 3 - 5 (for space and complexity reasons the example contains a deck with only 4 cards: a welcome & overview card, two cards to edit CD names and select the play mode and a generic help card). The corresponding WML document is given in Figure 10.

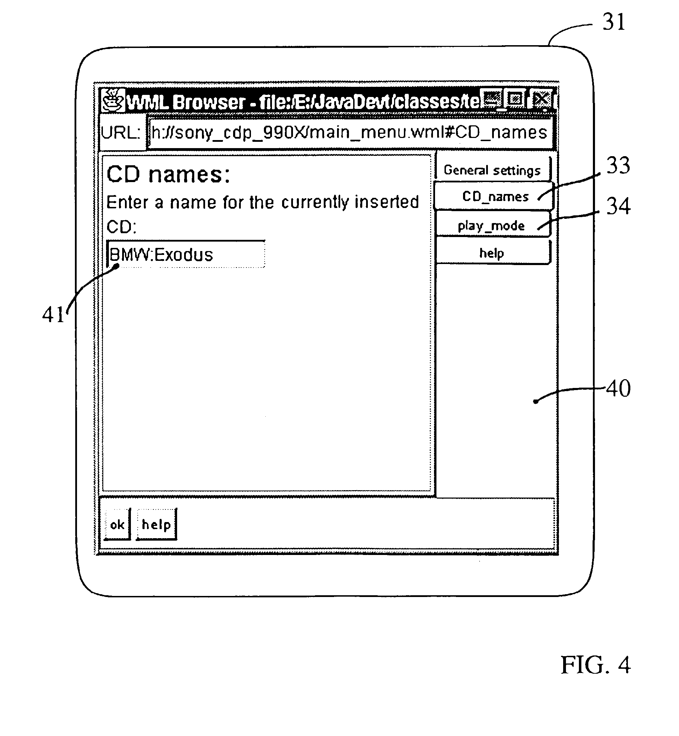

If a WML-browser is used by the controller, the above deck would be displayed as window 30 on the screen 31 of the controller, as shown in Figure 3. If the user now clicks on the CD-labels link 32 or if the user selects the "CD_names"-tab 33, a card 40 to edit CD-titles is brought up. This card 40 is shown in Figure 4. Here the user can now enter a CD-name in an insert field 41 using the input facility of the controller device, e.g., a full-blown keyboard, pen-input, voice-input, or the like.

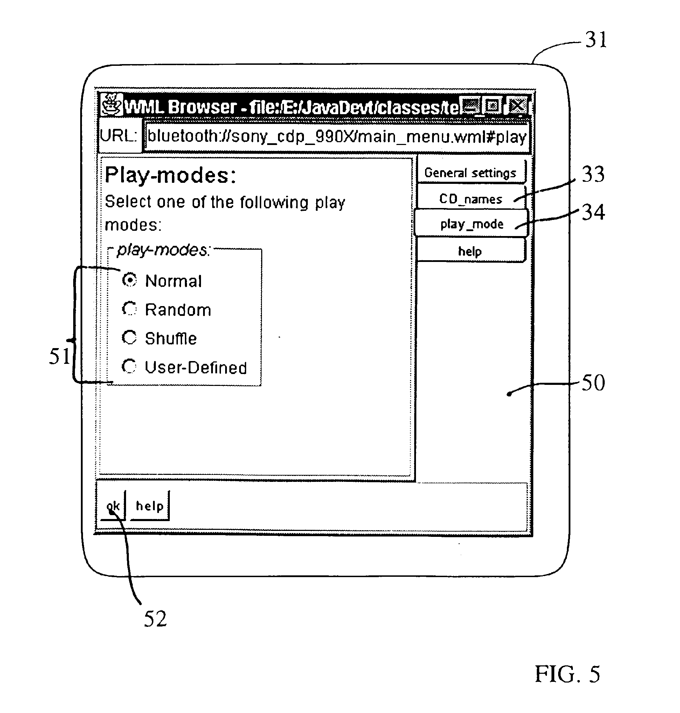

Selecting the play-mode link 35 (or play_mode-tab 34) pops up a window 50 as shown in Figure 5. Again, the user can choose the different play modes by clicking on one of the radio buttons 51 using the controller device's pointing medium.

Transfer of commands and parameters: When the user clicks an OK-button, e.g., the OK-button 52 on the CD-player play-modes window 50 of Figure 5, the controller's browser submits e.g. the following URL:
bluetooth://sony_cdp_990/playmode/select;Normal to switch the play mode to "Normal". Based on the scheme or protocol (here "bluetooth") the controller device's communication stack recognizes, that this is not a normal request to sent out via TCP/IP and the Internet but rather that this must be intercepted and forwarded to the local (bluetooth) communication stack.

The host specification of the URL is then used to address the specified device (here a "Sony CD-player model 990") and the remaining URL-part (the optional path, the command and the optional parameter(s)) are then sent to the specified device.

Recognition and execution of commands: The addressed device must have a simple "command-interpreter" that is able to analyze submitted URLs, i.e. extracts and recognizes certain command strings plus optionally separates and converts parameters, etc. The complexity and robustness of this interface is completely up to the manufacturers discretion.

Feedback: The user expects some reaction when he/she presses a button or clicks on a link and thus "submits a request" to the controlled device. For this reason that device may react (this is an optional step) and return some response to the submitted request (just getting a time-out message in the browser and no success/failure indication whatsoever is usually not sufficient).

The flexibility, size, and complexity of this response is completely up to the manufacturers discretion, the devices capabilities, and resources. The device could e.g. either
- return a specific card confirming the reception of the command and describing the results of its execution (if any), or it
- returns its complete user-interface-"deck" again (possibly with certain texts or default choices now adapted according to the status changes caused by the previous command, or it
- returns just a minimal OK- or error-page depending on the command's result and the user than has navigate back to the control stack by pressing "return" in the browser.

Other reactions or combinations of the above are of course also possible.

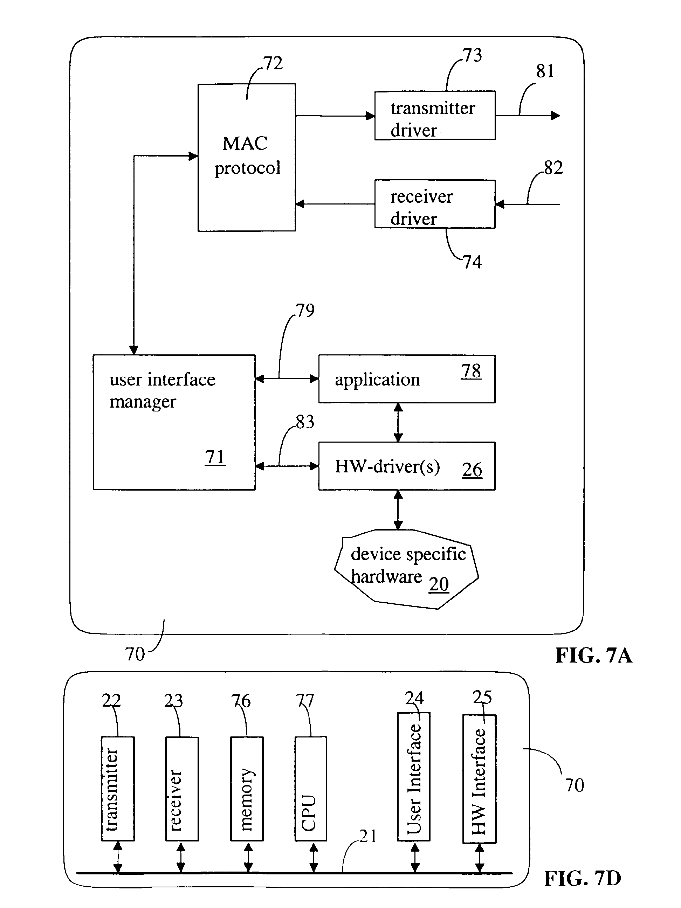

In the following an exemplary implementation of the present scheme is described in connection which Figure 7A. In this Figure a schematic block diagram of the components (note that some are logical components and others are physical components) of a device 70 - in which the present invention is implemented - is shown. The device 70 comprises a transmitter driver 73 for sending information via an output channel 81 to another device (such as a device with better user-interface capabilities), and a receiver driver 74 for receiving through an input channel 82 information from another device. Note that in the present example there are two channels 81, 82 shown. These channels can be any kind of channels, such as an IR, RF, or body network channels, for example. These channels do not have to be the same. It is conceivable that the output channel 81 is an infrared channel whereas the input channel 82 is a RF channel.

The transmitter driver 73 and receiver driver 74 communicate with a medium access control (MAC) unit 72. The MAC layer is well defined by international standards (cf. ISO OSI (Open Standards Interconnection) reference model as described in A.S. Tannenbaum's book "Computer Networks", for example) and the MAC unit 72 might be a conventional unit employed in communication systems to control the MAC layer. Note that a MAC layer is a logical division, and would be only logically divided from other parts of the protocol implemented at 71 on the same physical device. The MAC unit 72 might be employed to detect and/or avoid collisions. In the present embodiment the MAC unit 72 is used to send and receive packets. In many cases such a MAC unit 72 is not required.

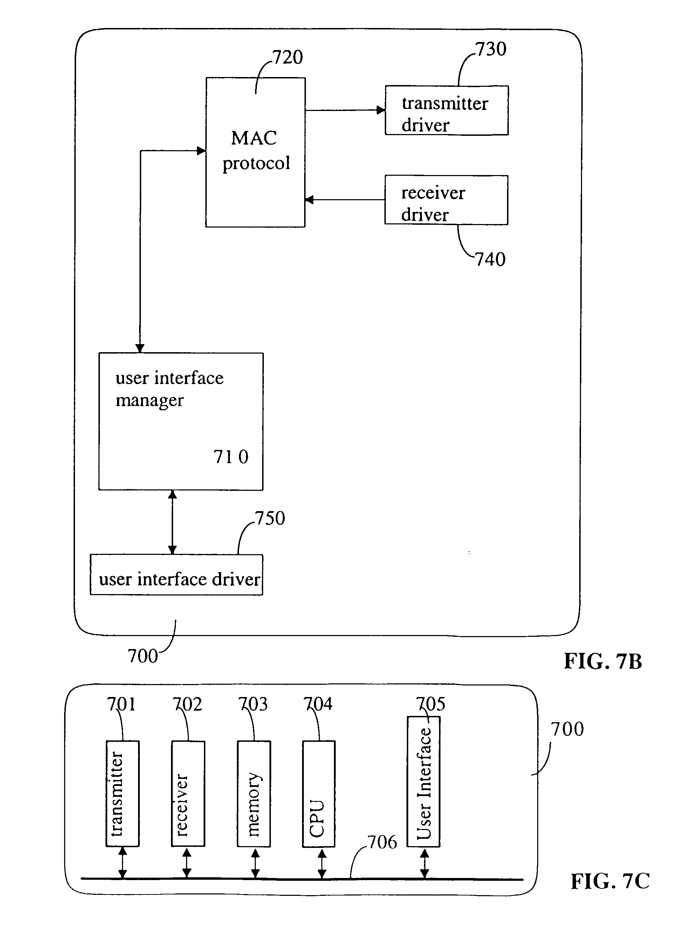

The power might be provided by via a power plug, a solar cell, a battery, or the like. The power supply (not shown) provides power to the components of the device 70. For sake of simplicity, the respective circuit lines or cables are not shown in Figure 7.

As shown in Figure 7D the device 70 may comprise a bus 21 enabling communication between some of the device's components/units (such as the central processing unit (CPU) 77, memory 76, the communication hardware 22, 23 and any other device specific hardware 20 through a hardware interface 25). The device 70 may also have a user-interface unit 24 for interaction with a user (e.g. a small LCD display and some input keys). Note that the actual user interfaces are not shown in Figure 7A.

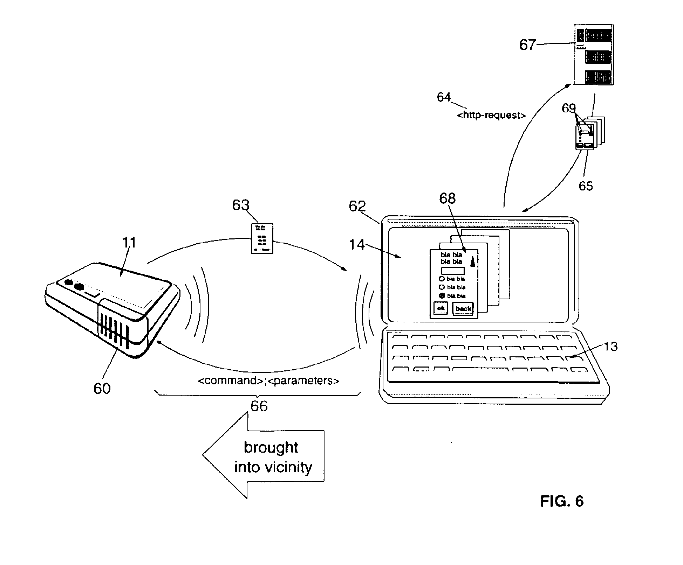

For remote access user-interface information is fed from a user-interface manager 71 to the MAC unit 72 and forwarded to the (remote) controlling device. User-interface information refers to information needed by the device with better user-interface capabilities to provide a user-interface to a user. Depending on the implementation, user-interface information refers to information that describes a full user-interface (see item 19 in Figure 1), or it describes an initial URL or a partial user-interface (item 63 in Figure 6) - see below for a description of the approach to provide a partial user interface only.

On the backward path commands entered by the user are fed via MAC 72 and user interface manager 71 to soft- and/or hardware controlling the device 70. To do so the user-interface manager 71 may communicate directly (item 83) or indirectly via an optional application programming interface 79 (API) and a device specific application 78 with hardware drivers 26 and consequently with device specific hardware 20 that provides and embodies a device's purpose and/or functionality (be it a video cassette recorder, a coffee machine, a printer, a stereo device, etc.). The actual activity or functionality of the device 70 is independent of the present scheme. The important point is, that - using the presented scheme - this activity can be controlled and/or monitored from another device.

Note that the MAC 72, the user-interface manager 71 and the application 78 are logical constructs. They could be implemented on separate devices, but they can equally well be incorporated into a program stored in memory 76. If incorporated into a program the device 70 might physically be the same as any other conventional device, except for the fact that it comprises the above-mentioned program. This program comprises instructions that, if processed by the CPU 77, make the device 70 perform the steps according to the present invention.

The user-interface manager 71 implements at least part of the present scheme for exchange of user-interface information, allowing the user-interface to be provided at a remote device and control information and/or parameters to be received from the device in response to user input.

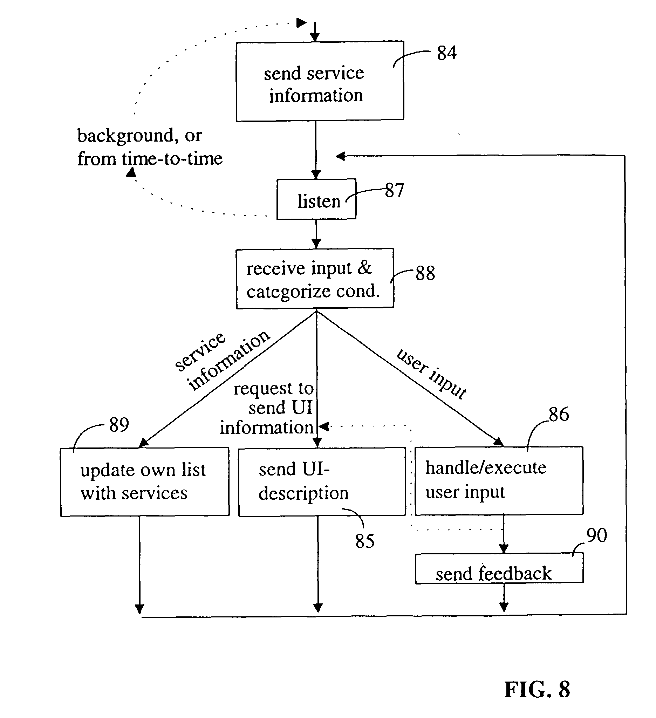

A schematic flow chart is given in Figure 8. This flow chart is used to describe the steps that are performed by a computer device with limited user-interface. In the present example this device is listening for information (box 87). From time to time the device may send some service information (service announcement) to one or more devices within vicinity (box 84). This listening mode is optional. This service announcement process may run in the background, as indicated by the dashed loop on the left hand side of Figure 8. If the device receives input (box 88) from another device (the second device), it categorizes this input into one of several categories. In the present example there are three categories: service input; request to send user interface (UI) information; user input. If the input contains service information, then this information is used to update the device's own list of services (box 89). This service information may be used by the second device to transmit information about its capabilities. This service information may be kept in a list so that it is always present if needed. Other schemes are conceivable where the information is only fetched if needed, for example. If the input is identified to be a request to send user interface (UI) information then the device sends its UI information to the second device (box 85). If the input comprises a user input, then the device handles and/or executes this user input (box 86). In an optional step (box 90) some feedback is returned to the second device to indicate to the user that the controlled device handled or executed his command.

Alternatively (see the dashed arrow at the lower righthand side) the device could send an entire or partial UI description again, updated such, that it reflects results or status changes caused by the prior command. Finally, the device goes back into listening mode (box 87).

The embodiment described in connection with Figure 8 implements a scheme where the second device (i.e., the device with better or more powerful user interface) triggers the computer device with limited user-interface to send user interface information. This can for example be initiated in that a user points with the second device into the direction of the computer device with limited user-interface.

The embodiment of a controller 700 - i.e. a device that has a better user-interface - is illustrated in Figures 7B and 7C. Figure 7B shows some of the logical and software-layer building blocks and Figure 7C shows some building blocks of the hardware layer. As shown in Figure 7B, the device 700 comprises a MAC protocol handler 720, a transmitter driver 730, and a receiver driver 740 for communication with a remote device (not shown). In addition, there is a user interface manager 710 and some driver 750 to communicate with the user interfaces. Again, the device 700 can comprise a bus 706 (e.g. a back plane bus or a cable bus) for interconnecting a transmitter 701, receiver 702, memory 703, CPU 704, and user interface 705 connected to a display and/or keyboard, pointing device, for example.

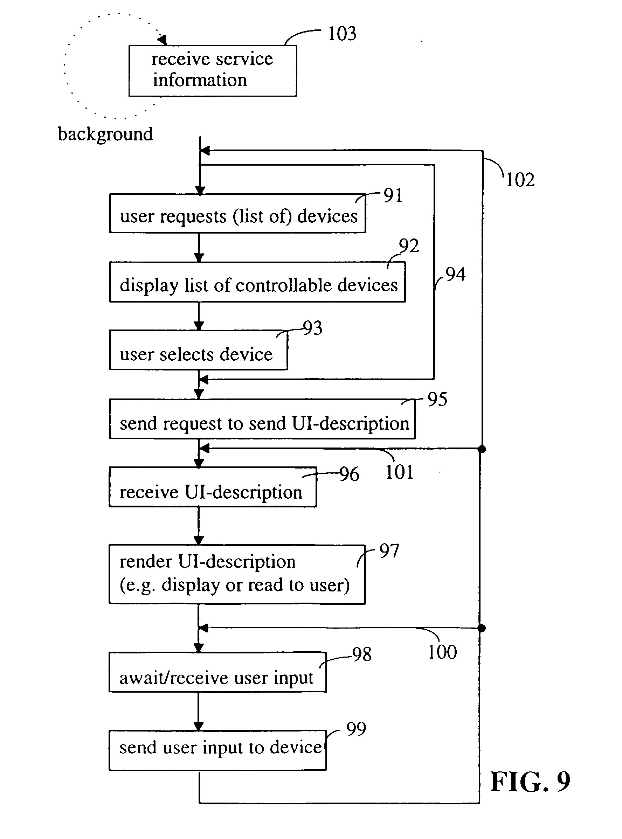

The corresponding steps that are performed by the second device are illustrated in Figure 9. This second device may receive service information from the computer device with limited user-interface (box 103) if this device is set up to send such information from time to time. If there is a plurality of computer devices with limited user-interfaces (controllable devices) within reach of the second device, then - according to the present implementation example - a list of these controllable devices is presented to the user (boxes 91, 92). Then the user selects the device (controlled device) he wants to control or interact with (box 93). If there is only one controllable device or if the second device otherwise knows which controllable device the user wants to interact with, then the boxes 91-93 can be bypassed as indicated by arrow 94. Now a request to send user interface information is sent to the controlled device (box 95). The controlled device responds by sending the requested user interface information. After this user interface information is received by the second device (box 96), a user interface is rendered to the user (box 97). This can for example be done by displaying the user interface to the user, by reading some text to the user, by printing some information, and so forth. The second device then waits for some user input (box 98) which is then sent back to the controlled device (box 99). A feedback received from the controlled device may be provided to the user (not illustrated in Figure 9). The second device may either wait for another user input (arrow 100), or it may return to a state where is expects some user interface information (arrow 101), or it returns to the initial state (arrow 102).

There is an other scheme conceivable where the computer device with limited user-interface (controlled device) initiates the whole process. In this case, the controlled device sends user interface information to a particular second device. If there is a plurality of devices within reach of the controlled device, then the to-be controlled device or the user may chose one. Before user-interface information is sent out, the device or user might want to check whether there is another device in vicinity which has the right user-interface. This can be done by simply looking at the information stored in a list with services. If there is no such list maintained, the controlled device might simply decide to transmit the user-interface information hoping that there is in fact a device in vicinity which is able to receive and interpret the user-interface information. The second device receives the user interface information and provides a corresponding user interface to the user. The user then uses this user interface to input information. The user's input is then sent to the controlled device where the input is handled and/or executed. In an optional step some feedback is returned to the second device to indicate to the user that the controlled device handled or executed his command.

An extension of the above described scheme is addressed below (see Figure 6). This extension provides for a split of user-interface source (device 67) and the command target 60, as illustrated in Figure 6. The controlled device 60 does not necessarily have to supply the entire user-interface description (which could become quite large - e.g. when lots of graphical elements are deployed) but only parts of it. In this case the device 60 just sends a partial user-interface 63 (e.g. a text-only version) via the wireless communications path 66 to the controller 62. Or the controlled device 60 might supply only an initial user-interface description 63 (e.g. a URL) or "pointer".

The actual user-interface 65 or the missing part(s) (e.g. graphics 69) are then fetched from other locations (e.g. a file pre-installed on the controller or some WWW server on the Internet) and combined into a unified user-interface presentation 68 on the screen 14 of the device 62. In the present example the actual user-interface is fetched from a WWW server 67 using an http request 64. This would allow to keep the user-interface description 63 in the device 60 very small and would only require the implementation of a simple command- and parameter parsing capability in the device 60 itself.

Another, more complex or (semi-)automatic user-interface implementation is now addressed: While the controlled device might only implement basic commands, using scripting techniques, these commands could be combined by the controller to form more powerful compound commands and also allowing to automatize certain repetitive task. Given e.g. a browser equipped with some flexible scripting language one could for example automatize task like the following:
- Ask the user to insert a CD
- Once a CD is inserted, request and display the current CD's identification code.
- Search that CD's id-code in some Web-based database (e.g. "CDDB")
- Copy title and author of that CD into the title-field of the CD-player's UI (see example below) and submit that request.
- Start over.

Thus the user could simply insert one CD after the other into a CD-player (controlled device in the present example) while the PC (controller in the present example) searches and automatically programs the corresponding CD-labels into the CD-player.

The present invention can be improved by allowing the translation of user-interface controls. In this case, the controlling device acts as a format translator, i.e. converts user-interface elements to/from different formats or media. The controlling device could provide speech synthesis and "read" some text-message to a vision-impaired or occupied person (e.g. during car-driving). Similarly, it could convert spoken commands to enter data into an input field or activate a control-element (a spoken "button" click). Such conversion is of course eased or encouraged by user-interface representation formats, that do not make any assumptions about the actual physical user-interface capabilities available in a device, but rather specify abstract functional levels of controls, e.g. WML does not specify minimal display sizes in pixels nor require a minimum number of fonts to be available for menus and text-output but rather specifies "selection", "input" and "activation" capabilities. Menu-texts can either be displayed or e.g. read to the user and the user can type his/her answer or can simply speak to the device.

If a manufacturer can rely on the fact that seldom used functions need not be controlled via a device's front-panel but rather using a better suited external device, the amount of user-interface code for complicated, seldom used functions can be drastically reduced, which yields much easier, less error-prone software development and consequently shorter time-to-market and considerable price benefits due to quicker development. A controllable device in accordance with the present invention can be simpler and less expensive.

Given a minimal communication range (say 15 - 20m) the device to be controlled need not even be in the same room or flat. It could be in the basement or on the roof (e.g. heating, air condition, antennas, cable tuners, satellite receivers, etc.).

The standardized communication channel between a controlled device and a controller can be extended (this technique is usually known as "proxy") to allow the bridging of larger distances and to allow remote-control and remote-diagnosis capabilities. Example: building and heating control might require special knowledge such that even a good user-interface does not enable a customer to correctly adjust certain settings. By temporarily relaying the user-interface to a specialized firm, some external specialist may configure or diagnose a remote system. Sometimes such world-wide access to home equipment might be convenient for a "normal" user, too, because it will allow the user to control systems at home.

It would also be possible to use HTML as exchange format. This allows more flexible, more powerful user-interfaces but would be less elegant and compact than an WLM implementation. Any other markup language can be used as well.

If the host-device (the controller) supports drag-and-drop capabilities this functionality can be exploited - e.g. to copy an appointment from a PDA's agenda to the downloaded user-interface of a wrist-watch. This drag and drop can work between host-applications and downloaded user-interfaces. There can also be a drag and drop between devices. If more than one device is currently controlled by the same controller, that host can act as a mediator, i.e. one could drag and drop information between two controlled devices (e.g. copy a phone number stored in a wrist-watch to a mobile phone).

Many of the benefits of the present invention become obvious when reading the specification. The present scheme allows to make use of larger, better readable displays (e.g., a larger color graphics display), better/faster input capabilities (e.g.,a full-fledged keyboard, or pointing device), better suited I/O interfaces (e.g. a printer or audio system). It is certainly easier to program a mobile phone or a wrist-watch using a PDA or a Computer screen and a keyboard than keying-in data on a tiny numeric keyboard. According to the present invention, the user can use a mouse, pen, or any other pointing device provided by the device to control features of a device which has no such mouse, pen, or other pointing device.

In the drawings and specification there has been set forth a preferred embodiment of the invention and, although specific terms are used, the description thus given uses terminology in a generic and descriptive sense only and not for purposes of limitation.

The present invention can be in part or as a whole be implemented by or on a special computer device or a general purpose computer device. This can be done by implementing the invention in some form of computer program. Computer program in the present context means an expression, in any language, code or notation, of a set of instructions intended to cause a computer device to perform a particular function either directly or after either or both of the following:
a) conversion to another language, code or notation;
b) reproduction in a different material form.

It will be appreciated by persons skilled in the art that the present invention is not limited by what has been particularly shown and described herein above. Rather the scope of the invention is defined only by the claims which follow:

## Claims

1. Method for controlling a first computer device with limited user-interface via a remote second computer device, whereby both computer devices are interconnected through a wireless communication channel and both computer devices support a common communications protocol, comprising the steps:
• sending user-interface information from the first computer device to the second computer device,
• providing a user-interface by the second computer device using the user-interface information,
• receiving user input at the second computer device,
• sending the user input to the first computer device, and
• executing the user input at the first computer device.

2. The method of claim 1, wherein a user-interface description is used to transmit the user-interface information.

3. The method of claim 1, wherein the second computer device announces its services to the first computer device prior to the sending of user-interface information from said first computer device to said second computer device.

4. The method of claim 1, wherein the wireless communication channel is automatically established between the first computer device and the second computer device.

5. The method of claim 1, wherein the second computer device comprises a display for providing a user-interface by displaying it on the display.

6. The method of claim 1, wherein the second computer device comprises a keyboard for receiving the user input.

7. The method of claim 1, wherein a markup language is used for sending user-interface information from the first computer device to the second computer device.

8. The method of claim 7, wherein WML is used as the markup language.

9. The method of claim 7, wherein the second computer device comprises a browser software which provides the user-interface using the user-interface information.

10. The method of claim 1, wherein a special protocol is used for sending the user input to the first computer device.

11. The method of claim 11, wherein the hypertext transport protocol, or the wireless session protocol is used as the special protocol.

12. The method of claim 1 comprising the step of sending a feedback from the first computer device to the second computer device.

13. The method of claim 12, wherein the feedback indicates whether the execution of the user input at the first computer device was successful.

14. The method of claim 1, wherein the first computer device initiates the process by sending user-interface information to the second computer device.

15. The method of claim 1, wherein the second computer device requests the first computer device to send the user-interface information.

16. A system with
- a first computer device (70) comprising a limited user-interface, a first processor (77), a first transceiver (73, 74), a first memory (76), and a user-interface manager (71);
- a second computer device (700) comprising a second user-interface (705), a second processor (704), a second transceiver (730, 740), and a second memory (703); and
- a wireless communications channel (81, 82) for communication between the first computer device (70) and the second computer device (700);
whereby the user-interface manager (71) controls the sending of user-interface information via the first transceiver (73, 74), the wireless communications channel (81, 82) and the second transceiver (730, 740) to the second computer device (700),
whereby the second controller (710) provides a user-interface on the second user-interface (705, 750) using the user-interface information,
whereby the second computer device (700) receives user input through the second user-interface (705, 750),
whereby the second computer device (700) sends the user input via the second transceiver (730, 740), the wireless communications channel (81, 82), and the first transceiver (73, 74) to the first computer device (70), and
whereby the first computer device (70) executes the user input.

17. The system of claim 16, whereby the first transceiver (73, 74) and second transceiver (730, 740) automatically establish the wireless communication channel (81, 82) between the first computer device (70) and the second computer device (700).

18. The system of claim 16, whereby the second user-interface comprises a display for displaying a user-interface.

19. The system of claim 16, whereby the second user-interface (705, 750) comprises a keyboard for receiving the user input.

20. The system of claim 16, whereby the second computer device (700) comprises a browser software for providing the user-interface on the second user-interface (705, 750) using the user-interface information.

21. The system of claim 16, whereby the second computer device (700) comprises means that allow a user to initiate a process where the second computer device (700) requests the user-interface information from the first device (70).

22. The system of claim 16, further comprising a third computer device (67) which has a third processor, a third transceiver, and a third memory storing part of the user-interface information.

23. The system of claim 22, whereby a first part of the user-interface information is transmitted by the first computer device (70) and a second part of the user-interface information is transmitted by the third computer device (67).

24. The system of claim 23, whereby the first part of the user-interface information is a pointer to a portion of the third memory where the second part of the user-interface information is stored.

25. A computer program product comprising a computer readable medium, having thereon:
computer program code means, when said program is loaded, to make a computer device which comprises a limited user-interface, a processor, a transceiver for interfacing through a wireless communications channel with a remote computer device, a memory, and a user-interface manager, execute procedure to:
• send user-interface information through the wireless communications channel to the remote computer device,
• receive a user input that a user generated at the remote computer device via the wireless communications channel,
• execute the user input,
• send feedback through the wireless communications channel to the remote computer device.

26. A computer program product comprising a computer readable medium, having thereon:
computer program code means, when said program is loaded, to make a computer device which comprises a user-interface, a processor, a memory, a user-interface, and a transceiver for interfacing through a wireless communications channel with a remote user-interface limited computer device, execute procedure to:
• receive user-interface information from the user-interface limited computer device through the wireless communications channel,
• provide a user-interface using the received user-interface information,
• receive user input,
• send the user input via the wireless communications channel to the user-interface limited computer device,
• receive feedback through the wireless communications channel from the user-interface limited computer device,
• provide the feedback to a user.
